# EUROPÄISCHE PATENTSCHRIFT

(11) **EP 0 708 136 B1**
(45) Veröffentlichungstag und Bekanntmachung des Hinweises auf die Patenterteilung: **03.03.1999**
(21) Anmeldenummer: 95116169.4
(22) Anmeldetag: 13.10.1995
(51) Int. Cl.: C08K 3/04, C08K 3/36, C08L 21/00, B60C 1/00

(54) **Kautschukmischung und Reifenlaufflächenunterteil auf Basis derselben**
Rubber blend and tread base prepared therefrom
Composition de caoutchouc et couche de base de bande de roulement fabriquée à partir de cette composition

(30) Priorität: 21.10.1994 DE 4437646
(43) Veröffentlichungstag der Anmeldung: 24.04.1996
(73) Patentinhaber: Uniroyal Englebert Reifen GmbH, D-52068 Aachen (DE)
(72) Erfinder: Russell, Richard, Dr., B-4731 Eynatten (BE)
(74) Vertreter: Schneider, Egon

(56) Entgegenhaltungen:
- EP-A- 0 501 227
- EP-A- 0 620 250
- WO-A-91/12202
- FR-A- 2 353 486
- US-A- 5 132 357

## Beschreibung

Die vorliegende Erfindung betrifft Reiten umfassend seitliche Kissenstreifen aus einer mit Schwefel vulkanisierbaren Kautschukmischung.

Die Laufflächen pneumatischer Reifen können aus einem Laufflächenoberteil ("Cap") und einem darunterliegenden Laufflächenunterteil ("Hase") aufgebaut sein.

Laufflächenoberteil und Unterteil bestehen in der Regel aus verschiedenen vulkanisierten Kautschukmischungen, da sie unterschiedliche Anforderungen erfüllen müssen. Die Zusammensetzung des Laufflächenoberteils beeinflußt im wesentlichen die Haftung des Reifens auf dem Untergrund und insbesondere bei Nässe sowie den Rollwiderstand.

Seitliche Kissenstreifen unterhalb der beiden Gürtelkanten befinden sich als Bauelement in pneumatischen Reifen, die im Notfall auch ohne Luft betrieben werden können und dabei noch eine erhebliche Laufleistung aufweisen sollen.

Es wurde nun gefunden, daß bei Verwendung einer bestimmten vulkanisierbaren Kautschukzusammensetzung für die seitlichen Kissenstreifen der Rollwiderstand eines pneumatischen Reifens weiter gesenkt werden kann.

Bei der erfindungsgemäß verwendeten Kautschukmischung handelt es sich um eine mit Schwefel vulkanisierbare Kautschukmischung umfassend Naturkautschuk und/oder synthetisches cis-1,4-Polyisopren, feinverteilte Kieselsäure oder Feinverteilte Kieselsäure und Ruß als verstärkender Füllstoff, gegebenenfalls wenigstens ein Dien-Elastomer als weiteres Polymer sowie gegebenenfalls weitere übliche Zusatzstoffe, dadurch gekennzeichnet, daß der Ruß eine Dibutylphthalat-Absorption (DBPA-Zahl) von 30 bis 180 cm²/100 g (ASTM D 2414), eine Iodzahl von 10 bis 250 g/kg (ASTM D 1510) sowie eine CTAB-Zahl von 5 bis 150 m²/g (ASTM D 3765) besitzt,
die Kieselsäure eine BET-Fläche von 40 bis 350 m²/g, eine CTAB-Fläche von 50 bis 350 m²/g, einen mittleren Teilchendurchmesser von 10 bis 150 µm sowie eine DBP-Zahl von 50-350 ml/100 g besitzt,
bei Mischungen von feinverteilter Kieselsäure und Ruß das Volumenmischungs verhältnis Kieselsäure:Ruß 1:2 bis 5:1 beträgt,
und der Anteil des oder der verstärkenden Füllstoffe(s) 5 bis 50 Gew.-Teile, bezogen auf 100 Gew.-Teile Elastomere beträgt.

Es wurde überraschenderweise gefunden, daß erfindungsgemäße Reifen, die seitliche Kissenteile umfassen, die aus den oben angegebenen vulkanisierten Kautschukmischungen bestehen, einen im Vergleich zu Reifen, die seitliche Kissenteile aus Kautschukmischungen des Standes der Technik umfassen, erniedrigten Rollwiderstand aufweisen. Die Verbesserung beträgt 6% beim Einsatz der feinverteilten, gefällten Kieselsäure als Füllmaterial. Für Gemische von Ruß und Kieselsäure wurden vergleichbare Verbesserungen des Rollwiderstandes gefunden.

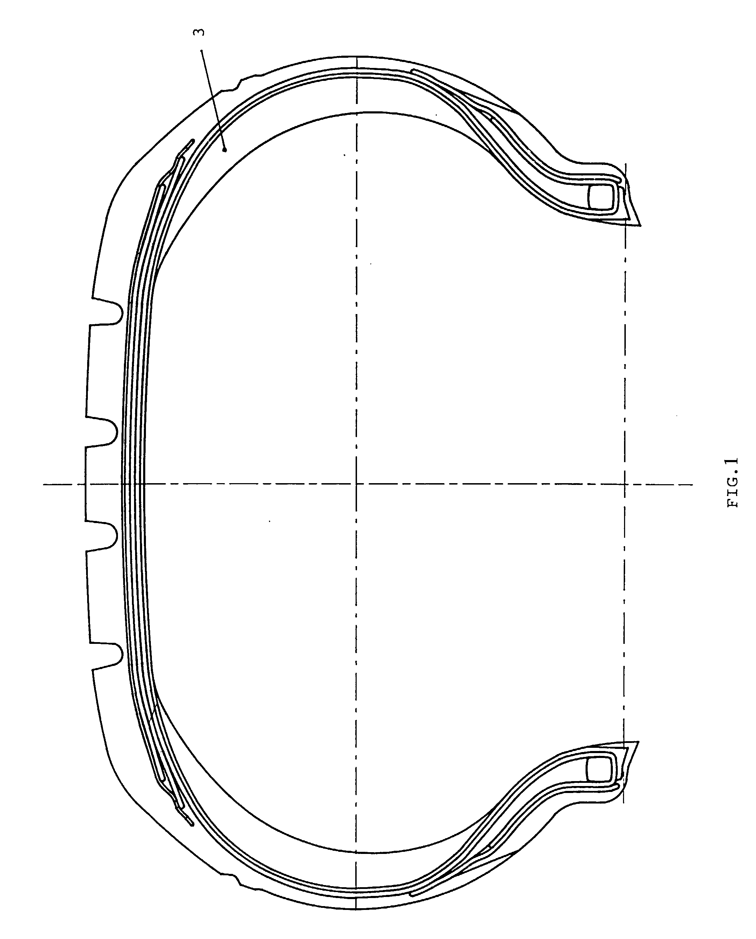

Figur 1 zeigt einen Querschnitt durch einen pneumatischen Reifen, der seitlich unterhalb der beiden Gürtelkanten einen Kissenstreifen (3) aufweist.

Die erfindungsgemäß verwendete Kautschukmischung kann ferner bis zu 40 Gew.-Teile, vorzugsweise bis zu 20 Gew.-Teile, bezogen auf 100 Gew.-Teile des Gesamtelastomeranteils, wenigstens eines Dien-Elastomer enthalten. Das Dien ist ausgewählt aus Polybutadien oder Copolymeren aus Isopren und Butadien. Bevorzugt ist jedoch der Zusatz von Polybutadien.

Diese Dien-Elastomere sind im Handel erhältlich oder können aus den zugrundeliegenden Monomeren nach dem Fachmann bekannten Verfahren in Gegenwart von Übergangsmetallkatalysatoren und insbesondere solchen, die Kobalt, Titan, Nickel oder Neodym enthalten, hergestellt werden.

Besonders bevorzugt sind Polybutadien-Elastomere, die mit den oben genannten Katalysatoren hergestellt werden und die eine Mooney-Viskosität (ASTM D 1646 - ISO 289, 100 °C) von 30 bis 70 Einheiten, vorzugsweise von 40 bis 65 Einheiten aufweisen.

Die erfindungsgemäß verwendete Kautschukmischung enthält das verstärkende Füllmaterial in einer Menge von vorzugsweise 10-40 Gew.-Teilen, bezogen auf 100 Gew.-Teile Elastomer (Polymer).

Der Ruß, der gemäß der Erfindung in der Kautschukmischung ebenfalls zur Anwendung kommen kann, besitzt eine besondere Morphologie. Vorzugsweise besitzt dieser Ruß einen mittleren Teilchendurchmesser von weniger als 19 nm, besonders bevorzugt von weniger als 18 nm (ASTM D-3849-89) und eine EM-Oberfläche (Electron Microscope Image Analysis, ASTM D-3849-89) von wenigstens 130 m²/g. Solche Ruße besonderer Morphologie sind im Stand der Technik bekannt und als Handelsprodukt unter der Bezeichnung N 121 (mittlerer Teilchendurchmesser 18,8 nm, EM-Oberfläche 131 m²/g), N 110 (mittlerer Teilchendurchmesser 17,8 nm, EM-Oberfläche 137 m²/g), HV-3396 (mittlerer Teilchendurchmesser 15,4 nm, EM-Oberfläche 165 m²/g) erhältlich. Derartige Ruße besitzen ferner eine Stickstoffoberfläche (N₂SA) von über 120 m²/g, vorzugsweise über 125 nm und besonders bevorzugt von über 130 m²/g.

Für nähere Einzelheiten wird verwiesen auf C.R. Herd et al, in "Morphology of Carbon Black Aggregates: Fractal versus Euclidean Geometry", Paper Nr. 38, vorgetragen auf dem Meeting of the Rubber Division, American Chemical Society, Toronto, Ontario, Canada, 21.-24. Mai 1991.

Kieselsäure mit besonderer Morphologie wird alleine oder in Kombination mit den oben genannten Rußen eingesetzt.

Besonders bevorzugt ist hierbei eine Kieselsäure mit besonderer Morphologie, die erhältlich ist durch Umsetzung von Alkalisilikat mit Mineralsäuren bei Temperaturen von 60°C bis 95°C unter Aufrechterhaltung eines pH-Wertes von 7,5 bis 10,5 unter kontinuierlicher Rührung, die je nach Bedarf intensiviert werden kann, und unter Einstellung eines Feststoffgehaltes in der Fällungssuspension von 90 bis 120 g/l, einer anschließenden Rücksäuerung auf PH-Werte ≤ 5, Filtration, Trocknung und bei Bedarf einer Vermahlung und/oder Granulation.

Diese Kieselsäuren sind dadurch gekennzeichnet, daß sie N₂-Oberflächen (Areameter, Fa. Ströhlein, gemäß ISO 5794/Annex D) von 40 m²/g bis 350 m²/g, insbesondere 100 bis 200 m²/g, bei einem BET/CTAB-Verhältnis von 0,8 bis 1,2 (pH 9, gemäß Jay, Janzen und Kraus in "Rubber Chemistry and Technology" 44 (1971) 1287), besitzen und gleichzeitig, wie unten in der Tabelle I angegeben, je nach Oberflächenbereich ein Porenvolumen, gemessen mittels Quecksilberporosimetrie (DIN 66 133), Silanolgruppendichten, gemessen in Form der Sears-Zahlen (G.W. Sears, Analyt. Chemistry 12, 1981-83 (1956)) sowie eine mittlere Aggregatgröße, gemessen mittels Photonenkorrelationsspektroskopie, besitzen:

**Tabelle I**

| N₂-Oberfläche [m²/g] | Hg-Porosimetrie [ml/g] | Sears-Zahl V₂ [ml] | Mittlere Aggregatgröße [nm] |
|---|---|---|---|
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

Die Kieselsäuren sind ferner gekennzeichnet durch gute Vermahlbarkeit, wiedergegeben durch die mittlere Teilchengröße nach Malvern-Laserbeugung [D (4,3)] von ≤ 11 µm, insbesondere ≤ 10 µm, gemessen nach Vermahlung auf einer Alpine-Kolloplex-Prallstiftmühle (Z 160) bei einer Durchsatzleistung von 6 kg/h.

Diese Vermahlbarkeit kann charakterisiert werden u.a. durch die Energie, die benötigt wird, um eine bestimmte Teilchenfeinheit zu erzielen oder umgekehrt durch die Teilchenfeinheit, die sich einstellt, wenn ein Mahlaggregat bei gleicher Leistung und gleichem Produktdurchsatz betrieben wird. Letztere ist der Einfachheit wegen die Methode der Wahl. Als Mühlentyp wird eine Alpine-Kolloplex-Prallstiftmühle (Z 160) eingesetzt und bei einem konstanten Produktdurchsatz von 6 kg/h betrieben.

Zur Charakterisierung der Teilchenfeinheit wird der mittlere, volumengewichtete Teilchendurchmesser MTG [D(4,3)] aus der Messung mittels Laserbeugung gewählt (Fa. Malvern Instruments, Modell 2600c).
Für weitere Einzelheiten zu dieser Kieselsäure mit der besonderen Morphologie wird auf die DE-A-4 334 201 verwiesen.

Im Gegensatz zu Ruß ist die Oberfläche von feinverteilter, gefällter Kieselsäure gegenüber Kautschuk inaktiv. Aus diesem Grund ist es notwendig ab einem Anteil von mehr als 20 Gew.-Teilen Kieselsäure, die Kieselsäure mit einem Silankupplungsmittel zu behandeln, um die Bindung zwischen der Kieselsäure-Oberfläche mit dem Kautschuk sicherzustellen. Diese Behandlung der Kieselsäure mit dem Silankupplungsmittel kann während des Mischens des Kautschuks oder Kautschuk-Gemisches mit der Kieselsäure erfolgen oder vor dem Mischen mit dem Kautschuk im Sinne einer Vorbehandlung.

Die Oberflächen der vorgenannten Kieselsäuren, einschließlich der Kieselsäuren mit der besonderen Morphologie, können zusätzlich mit Silankupplungsmitteln (Organosilanen) der nachfolgenden Formeln I bis III

[Rₙ¹-(RO)₃₋ₙ Si-(Alk)ₘ - (Ar)ₚ]_{q}[B] (I),

Rₙ¹ (RO)₃₋ₙ Si-(Alkyl) (II),

oder

Rₙ¹ (RO)₃₋ₙ Si-(Alkenyl) (III),

modifiziert werden, in denen bedeuten
- B:: -SCN, -SH, -CI, NH₂ (wenn q = 1) oder -Sₓ (wenn q = 2),
- R und R¹:: eine Alkylgruppe mit 1 bis 4 Kohlenstoffatomen, den Phenylrest, wobei alle Reste R und R¹ jeweils die gleiche oder eine verschiedene Bedeutung haben können, und R zusätzlich eine C₁-C₄ Alkoxygruppe bedeuten kann
- n:: 0,1 oder 2,
- Alk:: einen zweiwertigen geraden oder verzweigten Kohlenwasserstoffrest mit 1 bis 6 Kohlenstoffatomen,
- m:: 0 oder 1,
- Ar:: einen Arylenrest mit 6 bis 12 C-Atomen, bevorzugt 6 C-Atome,
- p:: 0 oder 1 mit der Maßgabe, daß p und n nicht gleichzeitig 0 bedeuten,
- x:: eine Zahl von 2 bis 8,
- Alkyl:: einen einwertigen geraden oder verzweigten ungesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Im Zusammenhang mit den Organosilanen, deren Herstellung und deren Kombination mit Kieselsäuren wird ferner auf die nachfolgende Literatur verwiesen:
S. Wolff "Reinforcing and Vulcanization Effects of Silane Si 69 in Silica-Filled Compounds", Kautschuk + Gummi, Kunststoffe 4, 280-284 (1981);
S. Wolff "Silanes in Tire Compounding After Ten Years - Review", Vortrag gehalten anläßlich des Third Annual Meeting and Conference on Tire Science and Technology, The Tire Society, 28.-29. März 1984, Akron, Ohio, USA;
S. Wolff "Optimization of Silane-Silica OTR Compounds. Part 1: Variations of Mixing Temperature and Time During the Modification of Silica with Bis(3-triethoxysilylpropyl)tetrasulfide", Rubber Chem. Technol. 55, 967-989 (1982);
S. Wolff, R. Panenka " Present Possibilities to Reduce Heat Generation of Tire Compounds", Vortrag gehalten anläßlich der International Rubber Conference IRC'85 in Kyoto, Japan;
S. Wolff, R. Panenka, E.H. Tan "Reduction of Heat Generation in Truck Tire Tread and Subtread Compounds", Vortrag gehalten anläßlich der International Conference on Rubbers and Rubber-like Materials, Jamshedpur, Indien, 6.-8. November 1986;
S. Wolff "The Influence of Fillers on Rolling Resistance", Vortrag gehalten anläßlich einer Tagung der Rubber Division, American Chemical Society, New York/NJ, USA, 8.11. April 1986.

Die erfindungsgemäß für die Vorbehandlung der Kieselsäuren eingesetzten Silankupplungsmittel sind dem Fachmann aus dem weiteren Stand der Technik, insbesondere aus der EP-A-0 447 066, der DE-A-2 062 883 oder der DE-A-2 457 446 bekannt. Bevorzugt im Rahmen der vorliegenden Erfindung als Silankupplungsmittel sind insbesondere solche Silane, die wenigstens eine Alkoxylgruppe im Molekül besitzen. Diese Silane sind ausgewählt aus Bis(3-triethoxysilylpropyl)tetrasulfid, Bis(2-triethoxysilylethyl)tetrasulfid, Bis(3-trimethoxysilylpropyl)tetrasulfid, Bis(2-trimethoxysilylethyl)tetrasulfid, 2-Mercaptoethyltriethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxysilan, 2-Chloroethyltrimethoxysilan, 2-Chloroethyltriethoxysilan, 3-Trimethoxysilylpropyl-N,N-dimethylthiocarbamoyltetrasulfid, 3-Triethoxysilylpropyl-N,N-dimethylthiocarbamoyltetrasulfid, 2-Triethoxysilyl-N,N-dimethylthiocarbamoyltetrasulfid, 3-Trimethoxysilylpropybenzothiazoltetrasulfid, 3-Triethoxysilylpropylbenzothiazoltetrasulfid, 3-Triethoxysilylpropylmethacrylatmonosulfid, 3-Trimethoxysilylpropylmethacrylatmonosulfid. Darunter sind Bis (3-triethoxysilylpropyl)tetrasulfid und 3-Trimethoxysilylpropylbenzothiazoltetrasulfid bevorzugt. Des weiteren können Bis(3-diethoxymethylsilylpropyl)tetrasulfid, 3-Mercaptopropyldimethoxymethylsilan, 3-Nitropropyldimethoxymethylsilan, 3-Chloropropyldimethoxymethylsilan, Dimethoxymethylsilylpropyl-N,N-dimethylthiocarbamoyltetrasulfid, Dimethoxymethylsilylpropylbenzothiazoltetrasulfid, 3-Thiocyanatopropyltriethoxysilan, 3-Thiocyanatopropyltrimethoxysilan, Trimethoxyvinylsilan, Triethoxyvinylsilan als Silankupplungsmittel eingesetzt werden.

Das Silankupplungsmittel wird in einer Menge von 0,2-30 Gew.-Teilen, vorzugsweise von 0,5-15 Gew.-Teilen, bezogen auf 100 Gew.-Teile der Kieselsäure eingesetzt. Die Reaktion zwischen der Kieselsäure und dem Silankupplungsmittel kann während der Herstellung der Mischung (in situ) oder, alternativ hierzu, außerhalb durchgeführt werden. Letzteres führt zu einer vorbehandelten (vormodifizierten) Kieselsäure, die als solche der Mischung zugesetzt werden kann.

Das Verhältnis der eingesetzten Volumina von Kieselsäure zu Ruß in Mischungen in denen diese beiden Komponenten zusammen eingesetzt werden, beträgt 1:4 bis 5:1, vorzugsweise 1:2 bis 3:1.

Die erfindungsgemäß verwendeten Kautschukmischung kann ferner die üblichen Zusätze in der üblichen Dosierung enthalten, wie insbesondere Weichmacher (Mineralöle), Alterungsschutzmittel, Schwefel, Vulkanisationsbeschleuniger (z.B. Sulfenamide, Thiazole, Guanidine) und Aktivatoren (z.B. Stearinsäure, Zinkoxid).

Die oben beschriebene, mit Schwefel vulkanisierbaren Kautschukmischung wird z.B. wie folgt hergestellt:
1) Mischen des Naturkautschuks und/oder des synthetischen cis-1,4-Polyisoprens mit dem verstärkenden Füllstoff aus feinverteilte Kieselsäure oder feinverteilte Kieselsäure und Ruß wie oben definiert und gegebenenfalls wenigstens einem Dien-Elastomer als weiterem Polymer, sowie der üblicherweise verwendeten Zusätze mit Ausnahme des Vulkanisationsystems unter gleichzeitigem Erwärmen der Zusammensetzung auf eine Temperatur bis zu 180 °C,
2) Zumischen des Vulkanisationsystems bei einer Temperatur unterhalb der Vulkanisationstemperatur.

Hinsichtlich der Bedeutung des Füllstoffs (Kieselsäure oder Kieselsäure und Ruß), des Dien-Elastomers, der üblichen Zusätze, des Vulkanisationssystems und des Silankupplungsmittels wird auf die obigen Ausführungen verwiesen.

Die Durchführung der Mischvorgänge und der Vulkanisation kann in den dem Fachmann bekannten Apparaturen (z.B. in Knetern) erfolgen. In der ersten Stufe des Mischens sollte eine Temperatur von wenigstens 130°C und vorzugsweise eine Temperatur zwischen 145 und 170°C eingestellt werden.

Das Verfahren kann während des Mischens ferner auch so geführt werden, daß das Gemisch zunächst auf die vorgegebene Temperatur erwärmt und dann wieder auf eine Temperatur unterhalb der Vulkanisationstemperatur abgekühlt wird. Dieser Zyklus ist wenigstens einmal zu durchlaufen und kann gegebenenfalls mehrfach wiederholt werden.

Die erfindungsgemäß verwendete Kautschukmischung kann nach dem Vulkanisieren in Gegenwart eines geeigneten Vulkanisationssystems unter üblichen, dem Fachmann bekannten Bedingungen zur Herstellung der oben genannten Kissenstreifen verwendet werden.

Die vorliegende Erfindung wird durch die nachfolgenden Beispiele erläutert, ohne jedoch darauf beschränkt zu sein.

### Beispiele:

Die gemäß der Erfindung einsetzbaren Kieselsäuren mit besonderer Morphologie können gemäß den nachfolgenden Beispielen 1 bis 3 hergestellt werden:

### Herstellungsbeispiel 1: Herstellung einer Kieselsäure im N₂-Oberflächenbereich von ≤ 100 m²/g

In einem Bottich werden unter Rühren 43,5 m³ heißes Wasser und so viel handelsübliches Natronwasserglas (Gewichtsmodul 3,42, Dichte 1.348) vorgelegt, bis pH 8,5 erreicht ist. Unter Aufrechterhaltung einer Fälltemperatur von 88°C und pH 8,5 werden nun 16,8 m³ des gleichen Wasserglases und Schwefelsäure (96%ig) in 150 Minuten gleichzeitig an gegenüberliegenden Stellen zugegeben. Es stellt sich ein Feststoffgehalt von 100 g/l ein. Danach wird weiter Schwefelsäure bis zum Erreichen von pH < 5 zugegeben. Der Feststoff wird auf Filterpressen abgetrennt, gewaschen und der Pressenteig einer Sprühtrocknung oder Drehrohrofentrocknung unterzogen und vermahlen oder auch nicht vermahlen.

Das erhaltene Produkt hat eine N₂-Oberfläche von 80 m²/g, eine Aggregatgröße von 1320 nm und eine Vermahlbarkeit von 10 µm. Die Sears-Zahl (V₂) beträgt 9,0 und die Hg-Porosimetrie 2,7 ml/g.

### Herstellungsbeispiel 2: Herstellung einer Kieselsäure im N₂-Oberflächenniveau von 100-150 m²/g

Es wird gemäß Beispiel 1 verfahren, mit der Ausnahme, daß in der Fällvorlage und während der Fällung ein pH-Wert von 9,0 konstant gehalten wird. Nach 135 Minuten stellt sich ein Feststoffgehalt in der Fällungssuspension von 93 g/l ein.

Die Kieselsäure hat eine N₂-Oberfläche von 120 m²/g, eine Vermahlbarkeit von 8,8 µm, eine Sears-Zahl von 9,1 bei einer Aggregatgröße von 490 nm und einem Hg-Porenvolumen von 2,85 ml/g.

### Herstellungsbeispiel 3: Herstellung einer Kieselsäure im N₂-Oberflächenniveau von 150-200 m²/g

Es wird gemäß Beispiel 1 verfahren mit der Ausnahme, daß in der Fällvorlage und während der Fällung ein pH-Wert von 9,5 konstant gehalten wird. Nach 135 Minuten stellt sich ein Feststoffgehalt in der Fällungssuspension von 93 g/l ein.

Die Kieselsäure hat eine N₂-Oberfläche von 184 m²/g, eine Vermahlbarkeit von 8,7 µm, eine Sears-Zahl von 15,7 bei einer Aggregatgröße von 381 nm und einem Hg-Porenvolumen von 2,26 ml/g.

## Patentansprüche

1. Reifen umfassend seitliche Kissenstreifen aus einer mit Schwefel vulkanisierten Kautschukmischung umfassend Naturkautschuk und/oder synthetisches cis-1,4-Polyisopren, feinverteilte Kieselsäure oder feinverteilte Kieselsäure und Ruß als verstärkenden Füllstoff, gegebenenfalls wenigstens ein Dien-Elastomer als weiteres Polymer sowie gegebenenfalls weitere übliche Zusatzstoffe, dadurch gekennzeichnet, daß
der Ruß eine Dibutylphthalat-Absorption (DBPA-Zahl) von 30 bis 180 cm³/100 g (ASTM D 2414), eine Iodzahl von 10 bis 250 g/kg (ASTM D 1510) sowie eine CTAB-Zahl von 5 bis 150 m²/g (ASTM D 3765) besitzt,
die Kieselsäure eine BET-Fläche von 40 bis 350 m²/g, eine CTAB-Fläche von 50 bis 350 m²/g, einen mittleren Teilchendurchmesser von 10 bis 150 µm sowie eine DBP-Zahl von 50-350 ml/100 g besitzt,
bei Mischungen von feinverteilter Kieselsäure und Ruß das Volumenmischungsverhältnis Kieselsäure:Ruß 1:2 bis 5:1 beträgt,
und der Anteil des oder der verstärkenden Füllstoffe(s) 5 bis 50 Gew.-Teile, bezogen auf 100 Gew.-Teile Elastomere beträgt.

2. Reifen nach Anspruch 1, dadurch gekennzeichnet, daß die Kautschukmischung der seitlichen Kissenstreifen bis zu 40 Gew.-Teile, bezogen auf 100 Gew.-Teile des Gesamtelastomeranteils eines Diens enthält, das ausgewählt ist aus Polybutadien und Copolymeren aus Isopren und Butadien.

3. Reifen nach Anspruch 1 oder 2, dadurch gekennzeichnet, daß in der Kautschukmischung der seitlichen Kissenstreifen der Anteil des oder der verstärkenden Füllstoffe(s) 10 bis 40 Gew.-Teile, bezogen auf 100 Gew.-Teile Kautschuk beträgt.

4. Reifen nach einem oder mehreren der Ansprüche 1 bis 3, dadurch gekennzeichnet, daß die Kautschukmischung der seitlichen Kissenstreifen als Füllstoff eine Kieselsäure mit einer Kieselsäure einer besonderen Morphologie enthält, die eine
N₂-Oberfläche 40 m²/g bis 350 m²/g, bei einem BET/CTAB-verhältnis von 0,8 bis 1,2 besitzen und gleichzeitig wie unten angegeben, je nach Oberflächenbereich ein Porenvolumen, gemessen mittels Quecksilberporosimetrie (DIN 66 133), Silanolgruppendichten, gemessen in Form der Sears-Zahlen sowie eine mittlere Aggregatgröße, gemessen mittels Photonenkorrelationsspektroskopie, besitzen:
| N₂-Oberfläche [m²/g] | Hg-Porosimetrie [ml/g] | Sears-Zahl V₂ [ml] | Mittlere Aggregatgröße [nm] |
|---|---|---|---|
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

5. Reifen nach Anspruch 4, dadurch gekennzeichnet, daß die Kieselsäure eine gute Vermahlbarkeit, wiedergegeben durch die mittlere Teilchengröße nach Malvern-Laserbeugung [D (4,3)] von ≤ 11 µm, insbesondere ≤ 10 µm, gemessen nach Vermahlung auf einer Alpine-Kolloplex-Prallstiftmühle (Z 160) bei einer Durchsatzleistung von 6 kg/h aufweist.

6. Reifen nach einem oder mehreren der Ansprüche 1 bis 5, dadurch gekennzeichnet, daß der Ruß einen mittleren Teilchendurchmesser von weniger als 19 nm (gemessen nach ASTM D-3849-89) und eine EM-Oberfläche von wenigstens 130 m²/g (gemessen nach ASTM D-3849-89) besitzt.

7. Reifen nach einem oder mehreren der Ansprüche 1 bis 6, dadurch gekennzeichnet, daß die Oberflächen der Kieselsäuren zusätzlich mit Silankupplungsmitteln der Formeln I bis III
[Rₙ¹-(RO)₃₋ₙ Si-(Alk)ₘ - (Ar)ₚ]_{q}[B] (I),
Rₙ¹ (RO)₃₋ₙ Si-(Alkyl) (II),
oder
Rₙ¹ (RO)₃₋ₙ Si-(Alkenyl) (III),
modifiziert sind, in denen bedeuten
B: -SCN, -SH, -Cl, -NH₂ (wenn q = 1) oder -Sₓ (wenn q = 2),
R und R¹: eine Alkylgruppe mit 1 bis 4 Kohlenstoffatomen, den Phenylrest, wobei alle Reste R und R¹ jeweils die gleiche oder eine verschiedene Bedeutung haben können, und R zusätzlich eine C₁-C₄-Alkoxygruppe bedeuten kann,
n: 0,1 oder 2,
Alk: einen zweiwertigen geraden oder verzweigten Kohlenwasserstoffrest mit 1 bis 6 Kohlenstoffatomen,
m: 0 oder 1,
Ar: einen Arylrest mit 6 bis 12 C-Atomen, bevorzugt 6 C-Atome,
p: 0 oder 1 mit der Maßgabe, daß p und n nicht gleichzeitig 0 bedeuten,
x: eine Zahl von 2 bis 8,
Alkyl: einen einwertigen geraden oder verzweigten gesättigten Kohlenwasserstoffrest mit 1 bis 20 Kohlenstoffatomen,
Alkenyl: einen einwertigen geraden oder verzweigten ungesättigten Kohlenwasserstoffrest mit 2 bis 20 Kohlenstoffatomen.

8. Reifen nach Anspruch 7, dadurch gekennzeichnet, daß das Silankupplungsmittel ausgewählt ist aus Bis(3-triethoxysilylpropyl)tetrasulfid, Bis(2-triethoxysilylethyl)tetrasulfid, Bis(3-trimethoxysilylpropyl)tetrasulfid, Bis(2-trimethoxyBilylethyl)tetraBulfid, 3-Mercaptopropyltrimethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxysilan, 2-Chloroethyltrimethoxysilan, 2-Chloroethyltriethoxysilan, 3- TrimethoxyBilylpropyl-N,N-dimethylthiocarbamoyltetrasulfid, 3-Triethoxysilylpropyl-N,N-dimethylthiocarbamoyltetrasulfid, 2-Triethoxysilyl-N,N-dimethylthiocarbamoyltetrasulfid,3-Trimethoxysilylpropylbenzothiazoltetrasulfid, 3-Triethoxysilylpropylbenzothiazoltetrasulfid, 3-Triethoxysilylpropylmethacrylatmonosulfid, 3-Trimethoxysilylpropylmethacrylatmonosulfid, Bis(3-diethoxymethylsilylpropyl)tetrasulfid, 3-Mercaptopropyldimethoxymethylsilan, 3-Nitropropyldimethoxymethylsilan, 3-Chloropropyldimethoxymethylsilan,Dimethoxymethylsilylpropyl-N,N-dimethylthiocarbamoyltetrasulfid, Dimethoxymethylsilylpropylbenzothiazoltetrasulfid, 3-Thiocyanatopropyltriethoxysilan, 3-Thiocyanatopropyltrimethoxysilan, Trimethoxyvinylsilan, Triethoxyvinylsilan.

9. Reifen nach Ansprüchen 7 oder 8, dadurch gekennzeichnet, daß die mit den Silankupplungsmitteln modifizierten Kieselsäuren erhältlich sind durch Umsetzung von 0,2 bis 30 Gew.-Teilen des Silankupplungsmittels bezogen auf 100 Gew.-Teile der Kieselsäure, wobei die Reaktion zwischen Kieselsäure und Silankupplungsmittel während der Mischungsherstellung (in situ) oder außerhalb (vormodifiziert) durchgeführt werden kann.

## Claims

1. A tire comprising lateral padding strips made of a rubber blend vulcanized with sulfur, comprising natural rubber and/on synthetic cis-1,4-polyisoprene, finely divided silica, or finely divided silica and carbon black as a reinforcing filler, optionally at least one diene elastomer as a further polymer, and optionally further usual additives, characterized in that
said carbon black has a dibutyl phthalate absorption (DBPA number) of from 30 to 180 cm³/100 g (ASTM D 2414), an iodine number of from 10 to 250 g/kg (ASTM D 1510), and a CTAB number of from 5 to 150 m²/g (ASTM D 3765);
said silica has a BET surface area of from 40 to 350 m²/g, a CTAB surface area of from 50 to 350 m²/g, an average particle diameter of from 10 to 150 µm, and a DBP number of from 50 to 350 ml/100 g;
for mixtures of finely divided silica and carbon black, the volume mixing ratio of silica to carbon black is from 1:2 to 5:1; and
the proportion of said reinforcing filler(s) is from 5 to 50 parts by weight, based on 100 parts by weight of elastomers.

2. The tire according to claim 1, characterized in that said rubber blend of the lateral padding strips contains up to 40 parts by weight, based on 100 parts by weight of the total amount of elastomer, of a diene selected from polybutadiene and copolymers of isoprene and butadiene.

3. The tire according to claim 1 or 2, characterized in that the proportion of said reinforcing filler(s) in said rubber blend of the lateral padding strips is from 10 to 40 parts by weight, based on 100 parts by weight of rubber.

4. The tire according to one or more of claims 1 to 3, characterized in that said rubber blend of the lateral padding strips contains a silica having a special morphology as said filler which has
an N₂ surface area of from 40 m²/g to 350 m²/g at a BET/CTAB ratio of from 0.8 to 1.2, and at the same time has a pore volume, depending on the surface region, as measured by mercury porosimetry (DIN 66 133), silanol group densities, expressed by Sears numbers, and an average aggregate size, as measured by means of photon correlation spectroscopy, as stated below:
| N₂ surface area [m²/g] | Hg porosimetry [ml/g] | Sears number V₂ [ml] | average aggregate size [nm] |
|---|---|---|---|
| < 100 | 2.5 - 3.4 | 6 - 12 | 900 -1500 |
| 100 - 150 | 2.4 - 3.2 | 8 - 15 | 400 - 850 |
| 150 - 200 | 1.8 - 2.6 | 10 - 16 | 300 - 550 |
| > 200 | 1.6 - 2.3 | 12 - 20 | 250 - 520 |

5. The tire according to claim 4, characterized in that said silica has a good milling performance, expressed by the average particle size after Malvern laser diffraction [D (4.3)] of ≤ 11 µm, especially ≤ 10 µm, as measured after milling on an Alpine Kolloplex impact wheel mixer (Z 160) at a mass throughput rate of 6 kg/h.

6. The tire according to one or more of claims 1 to 5, characterized in that said carbon black has an average particle diameter of less than 19 nm (measured according to ASTM D-3849-89), and an EM surface area of at least 130 m²/g (measured according to ASTM D-3849-89).

7. The tire according to one or more of claims 1 to 6, characterized in that the surface areas of said silicas are additionally modified with silane coupling agents of formulae I to III
[Rₙ¹-(RO)₃₋ₙSi-(Alk)ₘ-(Ar)ₚ]_{q}[B] (I),
Rₙ¹(RO)₃₋ₐSi-(alkyl) (II),
or
Rₙ¹(RO)₃₋ₐSi-(alkenyl) (III),
wherein
B represents -SCN, -SH, -Cl, -NH₂ (if q = 1), or -Sₓ (if q = 2);
R and R¹ represent an alkyl group having from 1 to 4 carbon atoms, a phenyl residue, wherein all residues R and R¹ may have the same meaning, or they may have different meanings, and R additionally may represent a C₁-C₄ alkoxy group;
n means 0, 1 or 2;
Alk represents a divalent straight or branched chain hydrocarbon residue having from 1 to 6 carbon atoms;
m means 0 or 1;
Ar represents an aryl residue having from 6 to 12 carbon atoms, preferably 6 carbon atoms;
p means 0 or 1, with the proviso that p and n are not both 0;
x means a number from 2 to 8;
alkyl represents a monovalent straight or branched chain saturated hydrocarbon residue having from 1 to 20 carbon atoms;
alkenyl represents a monovalent straight or branched chain unsaturated hydrocarbon residue having from 2 to 20 carbon atoms.

8. The tire according to claim 7, characterized in that said silane coupling agent is selected from bis(3-triethoxysilylpropyl)tetrasulfide, bis (2-triethoxysilylethyl)tetrasulfide, bis(3-trimethoxysilylpropyl)tetrasulfide, bis (2-trimethoxysilylethyl)tetrasulfide, 3-mercaptopropyltrimethoxysilane, 3-mercaptopropyltriethoxysilane. 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxysilane, 2-chloroethyltrimethoxysilane, 2-chloroethyltriethoxysilane, 3-trimethoxysilylpropyl-N,N-dimechylthiocarbamoyltetrasulfide, 3-triethoxysilylpropyl-N,N-dimethylthiocarbamoyltetrasulfide, 2-triethoxysilyl-N,N-dimethylthiocarbamoyltetrasulfide, 3-trimechoxysilylpropylbenzothiazoletetrasulfide, 3-triethoxysilylpropylbenzothiazoletetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, 3-nitropropyldimethoxymethylsilane, 3-chloropropyldimethoxymethylsilane, dimethoxymethylsilylpropyl-N,N-dimethylthiocarbamoyltetrasulfide, dimethoxymethyisilylpropylbenzothiazoletetrasulfide, 3-thiocyanatopropyltriethoxysilane, 3-thiocyanatopropyltrimethoxysilane, trimethoxyvinylsilane, triethoxyvinylsilane.

9. The tire according to claim 7 or 8, characterized in that said silicas modified with silane coupling agents are obtainable by reacting from 0.2 to 30 parts by weight of the silane coupling agent, based on 100 parts by weight of the silica, wherein the reaction between the silica and the silane coupling agent can be performed during the preparation of the mixture (in situ) or externally (premodified).

## Revendications

1. Pneumatique comprenant des bandes-coussins latérales constituées d'un mélange de caoutchouc vulcanisable au soufre, comprenant du caoutchouc naturel et/ou du cis-1,4-polyisoprène synthétique, de la silice à l'état de fine division ou de la silice à l'état de fine division et du noir de carbone en tant que matières de charge renforçantes, le cas échéant au moins un élastomère olénique en tant qu'autre polymère et le cas échéant d'autres additifs usuels, caractérisé en ce que
◆ le noir de carbone a une absorption du phtalate de dibutyle (indice DBPA) de 30 à 180 cm³/100 g (ASTM D 2414), un indice d'Iode de 10 à 250 g/kg (ASTM D 1510) et un indice CTAB de 5 à 150 m²/g (ASTM D 3765),
◆ la silice a une surface BET de 40 à 350 m²/g, une surface CTAB de 50 à 350 m²/g, un diamètre de particule moyen de 10 à 150 µm et un indice DBP de 50 à 350 ml/100 g,
◆ dans le cas de mélange de silice à l'état de fine division et de noir de carbone, le rapport en volume de silice : noir de carbone est de 1:2 à 5:1, et
◆ la proportion de la ou des matières de charge renforçantes est de 5 à 50 parties en poids pour 100 parties en poids d'élastomère.

2. Pneumatique selon la revendication 1, caractérisé en ce que la mélange de caoutchouc des bandes-coussins latérales contient jusqu'à 40 parties en poids, par 100 parties en poids des élastomères totaux, d'un diène choisi parmi le polybutadiène et les copolymères de l'isoprène et du butadiène.

3. Pneumatique selon la revendication 1 ou 2, caractérisé en ce que, dans le mélange de caoutchouc des bandes-coussins latérales la proportion de la ou des matières de charge renforçantes est de 10 à 40 parties en poids pour 100 parties en poids de caoutchouc.

4. Pneumatiques selon une ou plusieurs des revendications 1 à 3, caractérisé en ce que la mélange de caoutchouc des bandes-coussins latérales contient en tant que matière de charge une silice avec une silice d'une morphologie particulière, qui ont une surface spécifique à l'azote de 40 m²/g à 350 m²/g pour un rapport BET/CTAB de 0,8 à 1,2 et simultanément, selon la région de surface un volume de pores, mesuré par porosimétrie au mercure (DIN 66 133), des densités de groupes silanols, mesurées par les indices de Sears et une dimension moyenne de granulat, mesurée par spectroscopie à corrélation de photons, comme indiqué ci-après :
| Surface spécifique à l'azote, m²/g | Porosimétrie au mercure, ml/g | Indice de Sears V₂, ml | Dimension moyenne de granulat, nm |
|---|---|---|---|
| < 100 | 2,5-3,4 | 6-12 | 900-1500 |
| 100-150 | 2,4-3,2 | 8-15 | 400-850 |
| 150-200 | 1,8-2,6 | 10-16 | 300-550 |
| > 200 | 1,6-2,3 | 12-20 | 250-520 |

5. Pneumatique selon la revendication 4, caractérisé en ce que la silice est facile à broyer, cette facilité de broyage étant illustrée par la dimension de particule moyenne par diffraction de laser Malvem [D (4,3] qui est ≤ 11 µm, plus spécialement ≤ 10 µm, la mesure étant faite après broyage sur un broyeur à tiges et à chocs Alpine-Lolloplex (Z 160) avec une production de 6 kg/h.

6. Pneumatique selon une ou plusieurs des revendications 1 à 5, caractérisé en ce que le noir de carbone à un diamètre de particule moyen inférieur à 19 nm (mesure selon ASTM D 33849-89) et une surface EM d'au moins 130 m2/g (mesure selon ASTM D 3849-89).

7. Pneumatique selon une ou plusieurs des revendications 1 à 6, caractérisé en ce que les surfaces des silices sont en outre modifiées par des agents de couplage du type silane répondant aux formules I à III
[Rₙ¹-(RO)₃₋ₙ Si-(Alk)ₘ - (Ar)ₚ]_{q}[B] (I)
Rₙ¹ (RO)₃₋ₙ Si-(alkyle) (II)
ou
Rₙ¹ (RO)₃₋ₙ Si-(alcényle) (III)
dans lesquelles
B:-SCN, -SH, -CI, -NH₂ (lorsque q = 1) ou
-Sₓ (lorsque q = 2)
R et R¹ :un groupe alkyle en C1-C4, le groupe phényle, les groupes R et R¹ pouvant être identiques ou différents, et R peut en outre être un groupe alcoxy en C1-C4,
n:0,1 ou 2,
Alk:un radical hydrocarboné divalent à chaîne droite ou ramifiée en C1-C6, m:0 ou 1,
Ar:un groupe arylène en C6-C12, de préférence en C6,
p:0 ou 1, sous réserve que p et n peuvent être tous deux égaux à 0,
x:un nombre allant de 2 à 8,
alkyle:un radical hydrocarboné monovalent insaturé à chaîne droite ou ramifiée en C1-C20,
alcényle:un radical hydrocarboné monovalent insaturé à chaîne droite ou ramifiée en C2-C20.

8. Pneumatique selon la revendication 7, caractérisé en ce que l'agent de couplage du type silane est choisi parmi le tétrasulfure de bis-(3-triéthoxysilylpropyle), le tétrasulfure de bis-(2-triéthoxysilyléthyle), le tétrasulfure de bis-(3-triméthoxysilylpropyle), le tétrasulfure de bis-(2-triméthoxysilyléthyle), le 3-mercaptopropyltriméthoxysilane, le 3-mercaptopropyltriéthoxysilane, le 2-mercaptoéthyltriméthoxysilane, le 2-mercaptoéthyltriéthoxysilane, le 3-nitropropyltriméthoxysilane, le 3-nitropropyltriéthoxysilane, le 3-chloropropyltriméthoxysilane, le 3-chloropropyltriéthoxysilane, le 2-chloroéthyltriméthoxysilane, le 2-chloroéthyltriéthoxysilane, le tétrasulfure de 3-triméthoxysilylpropyl-N,N-diméthylthiocarbamoyle, le tétrasulfure de 3-triéthoxysilylpropyl-N,N-diméthyldithiocarbamoyle, le tétrasulfure de 2-triéthoxysilyl-N,N-diméthylthiocarbamoyle, le tétrasulfure de 3-triméthoxysilylpropylbenzothiazole, le tétrasulfure de 3-triéthoxysilylpropylbenzothiazole, le monosulfure-méthacrylate de 3-triéthoxysilylpropyle, le monosulfure-méthacrylate de 3-triméthoxysilylpropyle, le tétrasulfure de bis-(3-diéthoxyméthylsilylpropyle), le 3-mercaptopropyldiméthoxyméthylsilane, le 3-nitropropyldiméthoxyméthylsilane, le 3-chloropropyldiméthoxyméthylsilane, le tétrasulfure de diméthoxyméthylsilylpropyl-N,N-diméthylthiocarbamoyle, le tétrasulfure de diméthoxymethylsilylpropylbenzothiazole, le 3-thiocyanatopropyltriéthoxysilane, le 3-thiocyanatopropyltriméthoxysilane, le triméthoxyvinylsilane, le triéthoxyvinylsilane.

9. Pneumatique selon la revendication 7 ou 8, caractérisé en ce que les silices modifiées par des agents de couplage du type silane sont obtenues par réaction de 0,2 à 30 parties en poids de l'agent de couplage du type silane pour 100 parties en poids de la silice, la réaction entre la silice et l'agent de couplage de type silane étant exécutée au cours de la préparation du mélange (in situ) ou extérieurement (modification préalable).
